# EUROPÄISCHE PATENTSCHRIFT

(11) **EP 3 960 329 B1**
(45) Veröffentlichungstag und Bekanntmachung des Hinweises auf die Patenterteilung: **30.10.2024**
(21) Anmeldenummer: 21187349.2
(22) Anmeldetag: 23.07.2021
(51) Int. Cl.: B22C 3/00, B22D 11/103, B22D 17/02, B22D 17/20, B22D 35/04, B22D 41/02, C21B 7/06

(54) **GIESSTECHNISCHES BAUTEIL MIT KORROSIONSSCHUTZSCHICHTAUFBAU**
CASTING TECHNICAL COMPONENT WITH ANTICORROSION LAYER STRUCTURE
COMPOSANT DE TECHNIQUE DE COULÉE AVEC STRUCTURE DE COUCHE DE PROTECTION CONTRE LA CORROSION

(30) Priorität: 28.08.2020 DE 102020210913
(43) Veröffentlichungstag der Anmeldung: 02.03.2022
(73) Patentinhaber: Oskar Frech GmbH + Co. KG, 73614 Schorndorf (DE)
(72) Erfinder: Dannenmann, Helmar, 73614 Schorndorf (DE); Baesgen, Alexander, 73434 Aalen (DE)
(74) Vertreter: Patentanwälte Ruff, Wilhelm, Beier, Dauster & Partner mbB

(56) Entgegenhaltungen:
- EP-A2- 1 236 525
- WO-A1-2013/180219
- DE-A1- 102011 078 066
- DE-C1- 19 713 396
- GB-A- 1 393 816
- US-A- 4 122 642
- US-A- 5 415 219
- US-A1- 2002 130 450
- US-A1- 2007 054 057

## Beschreibung

Die Erfindung bezieht sich auf ein gießtechnisches Bauteil für eine Vorrichtung zum Gießen oder Handhaben einer Metallschmelze, wobei das Bauteil einen metallischen Grundkörper aufweist, der in einem Schmelzekontakt-Oberflächenbereich mit einem Korrosionsschutzschichtaufbau aus einer oder mehreren übereinanderliegenden Schichten versehen ist.

Derartige gießtechnische Bauteile sind in der Metallgießtechnik z.B. für Warmkammer-und Kaltkammer-Druckgießmaschinen in vielerlei Formen in Gebrauch, beispielsweise als Gießgarnituren, Gießbehälter, Schmelzeöfen, Schmelzefördereinheiten und Gießformen sowie Teilen dieser Metallgießkomponenten. Meist wird für den Grundkörper ein Eisenbasismaterial, d.h. ein Material auf Eisenbasis, verwendet, typischerweise ein Stahlmaterial wie ein Gussstahlmaterial, da derartige Bauteile ein gutes Kosten/Nutzen-Verhältnis besitzen. Unter dem Schmelzekontakt-Oberflächenbereich ist dabei vorliegend derjenige Bereich der Oberfläche des Grundkörpers des gießtechnischen Bauteils zu verstehen, der im Gießbetrieb kontinuierlich oder zumindest zeitweise der Metallschmelze ausgesetzt ist, d.h. mit dieser in Kontakt kommt.

Es hat sich herausgestellt, dass gießtechnische Bauteile mit einem Grundkörper aus Stahl in diesem Schmelzekontakt-Oberflächenbereich, d.h. in Bereichen, in denen sie im Gießbetrieb mit der heißen Metallschmelze in Kontakt kommen, von der flüssigen Metallschmelze chemisch angegriffen werden können, d.h. einer Korrosion unterliegen. So wird beispielsweise ein merklicher Korrosionsangriff durch Aluminiumschmelzen beim Aluminiumdruckguss auf damit in Kontakt kommende Stahloberflächen gießtechnischer Bauteile beobachtet.

Als Abhilfe ist es für Gießkolben/Gießzylinder-Einheiten von Metalldruckgussmaschinen bekannt, den Gießkolben und den Gießzylinder ganz aus einem keramischen Material oder aus einem Sintermaterial, z.B. aus gesintertem Titandiborid (TiB₂), zu fertigen. Die mechanische Festigkeit, Wärmewiderstandsfähigkeit und Stoßfestigkeit blieben jedoch oftmals unbefriedigend.

In ähnlicher Weise wird in der Offenlegungsschrift DE 2 364 809 vorgeschlagen, den Gießkolben und den Gießzylinder als zusammengesetztes gesintertes Bauteil aus einer Mischung von zwei oder mehr Stoffen aus der Stoffgruppe zu fertigen, welche aus Karbiden, Boriden und Nitriden besteht. Insbesondere wird eine spezielle Mischung von Borkarbid (B₄C) mit einem oder mehreren von TiB₂, Zirkondiborid (ZiB₂) und Bornitrid (BN) angegeben.

In der Patentschrift US 4.556.098 werden dieses und andere untersuchte Sintermaterialien weiterhin als unbefriedigend bezeichnet, und es wird alternativ ein heißgepresstes, ultrahartes Siliziumnitrid- oder Sialon-Material hoher Dichte für den Gießzylinder und den Gießkolben vorgeschlagen. Für einen Tiegel aus Gusseisen wird eine Schutzbeschichtung gegen Korrosion und Oxidation aus Ca, Al₂O₃ oder anderen Oxiden wie Al₂O₃-TiO₂ oder aus TiB₂, ZaB₂, CaB₂ oder anderen reinen oder gemischten Boriden oder aus AIN, Si₃N₄, BN, Sialonen oder anderen Nitriden angegeben, die z.B. aus einer Emulsion oder durch Flammspritzen aufgebracht wird. Für konische Stopfen zum Verschließen von Zugänglichkeitsbohrungen für den Steigkanal und anderen Teilen einer Gießgarnitur wird die Fertigung aus ebenfalls solchen korrosions- und erosionsfesten Materialien vorgeschlagen. Für Teile der Gießform, die der Metallschmelze nur noch bei niedrigeren Temperaturen ausgesetzt sind, wird eine Beschichtung aus einem dichten Material aus Si₃N₄, AIN, Sialon, BN, Graphit oder pyrolytischem Kohlenstoff oder Legierungen hiervon vorgeschlagen.

Die Patentschrift EP 2 723 916 B1 offenbart ein gießtechnisches Bauteil der eingangs genannten Art, bei dem der Korrosionsschutzschichtaufbau durch eine Korrosionsschutzschicht gebildet ist, die als eine Sol-Gel-Schicht unter Verwendung von Mikro-und/oder Nanopartikeln mit einer mittleren Partikelgröße zwischen 50nm und 50µm einer oder mehrerer Substanzen als Füllstoff gebildet ist, die aus der Gruppe bestehend aus Boriden und Karbiden der Übergangsmetalle und deren Legierungen sowie von Bor und Silizium ausgewählt sind, wobei die Sol-Gel-Schicht einen zirkonbasierten oder siliziumbasierten Gelbildner aufweist und durch mehrere Gel-Schichtlagen gebildet ist, von denen mindestens eine Schichtlage ohne Mikro- und/oder Nanopartikel gebildet ist, die eine äußere Schichtlage der Sol-Gel-Schicht bildet.

Je nach Anwendungsfall sind unterschiedlichste weitere Abhilfemaßnahmen bekannt, um gießtechnische Bauteile vor den hohen Temperaturen der zu gießenden Metallschmelze und/oder vor Korrosion zu schützen, wobei es insbesondere gebräuchlich ist, entsprechende Schutzschichten direkt als dünne Schichten an der zu schützenden Oberfläche des gießtechnischen Bauteils mittels entsprechender Oberflächenbeschichtungsverfahren zu bilden. So wird in der Patentschrift GB 1 393 816 die Bildung einer etwa 0,1 mm dicken sulfurisierten Schicht mittels eines Schwefelimprägnierverfahrens offenbart. Die Patentschrift US 5.415.219 offenbart ein Verfahren zur Herstellung einer Gießform zum Gießen von Bleigittern für Akkumulatoren, bei dem eine thermisch isolierende Faserkeramikschicht in eine passende Ausnehmung eines metallischen Grundkörpers eingefügt ist, auf deren Oberfläche durch ein Plasmasprühverfahren ein Metalloxid aufgebracht und diese Oberfläche zur Bildung einer porösen Außenschicht bearbeitet wird. In der Offenlegungsschrift EP 1 236 525 A2 wird vorgeschlagen, eine Gießformoberfläche mit einer gegen die flüssige Metallschmelze resistenten Beschichtung mit einer Dicke von weniger als 5mm aus einem thermisch isolierenden, wärmeschockbeständigen Material durch ein entsprechendes Auftragverfahren in-situ oder durch Aufkleben einer entsprechenden Folie zu versehen. In der Offenlegungsschrift US 2007/0054057 A1 ist das Aufbringen einer Trennmittelschicht auf Bornitridbasis in einer Dicke zwischen 0,5µm bis 250µm offenbart. Weitere herkömmliche Schutzschichtaufbauten für Schmelzetiegel sind in den Offenlegungsschriften US 2002/0130450 A1 und WO 2013/180219 A1 offenbart.

Die Patentschrift US 4,122,642 offenbart eine Auskleidung für die Wand eines Brennraums eines Brennofens unter Verwendung von speziellen, seitlich aneinander angrenzenden Auskleidungsblöcken, von denen jeder eine Zugangsöffnung für ein Schweißwerkzeug von einer Außenseite zu einer gegen die Wand anzulegenden Innenseite, eine sich lateral von der Zugangsöffnung erstreckende Ausnehmung an der Innenseite und eine in der Ausnehmung montierte Ankerplatte mit Verankerungsrippen aufweist, wobei die Ankerplatte durch Verschweißen über die Zugangsöffnung fixiert wird.

Die Patentschrift DE 197 13 396 C1 offenbart eine Auskleidung für eine Kernfusionskammer, in der Fusionsexperimente durchgeführt werden. Die Auskleidung ist aus Auskleidungselementen aufgebaut, die aus einer Metallplatte und einer hierauf befestigten, flexiblen Kohlenstoffschicht bestehen, wobei die Metallplatte und die Kohlenstoffschicht gekrümmt verlaufen. Die Kohlenstoffschicht ist als Folie oder Gewebe oder einer Kombination hiervon mit einer Dicke von höchstens 2 mm und Verunreinigungen weniger als 20 ppm gebildet.

Je nach Anwendungsfall sind unterschiedlichste weitere Abhilfemaßnahmen bekannt, um gießtechnische Bauteile vor den hohen Temperaturen der zu gießenden Metallschmelze und/oder vor Korrosion zu schützen, wobei es insbesondere gebräuchlich ist, entsprechende Schutzschichten direkt als dünne Schichten an der zu schützenden Oberfläche des gießtechnischen Bauteils mittels entsprechender Oberflächenbeschichtungsverfahren zu bilden. So wird in der Patentschrift GB 1 393 816 die Bildung einer etwa 0,1 mm dicken sulfurisierten Schicht mittels eines Schwefelimprägnierverfahrens offenbart. Die Patentschrift US 5.415.219 offenbart ein Verfahren zur Herstellung einer Gießform zum Gießen von Bleigittern für Akkumulatoren, bei dem eine thermisch isolierende Faserkeramikschicht in eine passende Ausnehmung eines metallischen Grundkörpers eingefügt ist, auf deren Oberfläche durch ein Plasmasprühverfahren ein Metalloxid aufgebracht und diese Oberfläche zur Bildung einer porösen Außenschicht bearbeitet wird. In der Offenlegungsschrift EP 1 236 525 A2 wird vorgeschlagen, eine Gießformoberfläche mit einer gegen die flüssige Metallschmelze resistenten Beschichtung mit einer Dicke von weniger als 5mm aus einem thermisch isolierenden, wärmeschockbeständigen Material durch ein entsprechendes Auftragverfahren in-situ oder durch Aufkleben einer entsprechenden Folie zu versehen. In der Offenlegungsschrift US 2007/0054057 A1 ist das Aufbringen einer Trennmittelschicht auf Bornitridbasis in einer Dicke zwischen 0,5µm bis 250µm offenbart. Weitere herkömmliche Schutzschichtaufbauten für Schmelzetiegel sind in den Offenlegungsschriften US 2002/0130450 A1 und WO 2013/180219 A1 offenbart.

Die Patentschrift US 4,122,642 offenbart eine Auskleidung für die Wand eines Brennraums eines Brennofens unter Verwendung von speziellen, seitlich aneinander angrenzenden Auskleidungsblöcken, von denen jeder eine Zugangsöffnung für ein Schweißwerkzeug von einer Außenseite zu einer gegen die Wand anzulegenden Innenseite, eine sich lateral von der Zugangsöffnung erstreckende Ausnehmung an der Innenseite und eine in der Ausnehmung montierte Ankerplatte mit Verankerungsrippen aufweist, wobei die Ankerplatte durch Verschweißen über die Zugangsöffnung fixiert wird.

Die Patentschrift DE 197 13 396 C1 offenbart eine Auskleidung für eine Kernfusionskammer, in der Fusionsexperimente durchgeführt werden. Die Auskleidung ist aus Auskleidungselementen aufgebaut, die aus einer Metallplatte und einer hierauf befestigten, flexiblen Kohlenstoffschicht bestehen, wobei die Metallplatte und die Kohlenstoffschicht gekrümmt verlaufen. Die Kohlenstoffschicht ist als Folie oder Gewebe oder einer Kombination hiervon mit einer Dicke von höchstens 2 mm und Verunreinigungen weniger als 20 ppm gebildet.

Der Erfindung liegt als technisches Problem die Bereitstellung eines gießtechnischen Bauteils der eingangs genannten Art zugrunde, wobei das gießtechnische Bauteil mit relativ geringem Aufwand herstellbar ist und eine hohe Korrosionsbeständigkeit gegen flüssige Metallgießschmelzen, insbesondere Aluminiumschmelzen, zeigt.

Die Erfindung löst dieses Problem durch die Bereitstellung eines gießtechnischen Bauteils mit den Merkmalen des Anspruchs 1. Vorteilhafte Weiterbildungen der Erfindung, die zur Lösung dieses und weiterer Probleme beitragen, sind in den Unteransprüchen angegeben, deren Inhalt einschließlich sämtlicher sich durch die Anspruchsrückbezüge ergebenden Merkmalskombinationen hiermit vollumfänglich durch Verweis zum Inhalt der Beschreibung gemacht wird.

Das Faservliesmaterial oder das Faserpapiermaterial für die Vliesschutzschicht besteht aus vergleichsweise kurzen Fasern, während der flexible Gewebekörper für den Schutzgewebekörper aus demgegenüber zugfesten, langen Fasern gebildet ist. In beiden Fällen finden hierfür gießtemperaturbeständige Faser- bzw. Gewebematerialien Verwendung, wie sie an sich für gießtechnische Anwendungen, wie zum Aluminiumgießen, bekannt sind. Als Faservliesmaterial sind insbesondere herkömmliche, unter der Bezeichnung Keramikvlies auf dem Markt befindliche Vliesmaterialien auf verwendbar. Als Faserpapiermaterial sind insbesondere herkömmliche, unter der Bezeichnung Keramikpapier auf dem Markt befindliche Papiermaterialien verwendbar, wobei vorliegend der Einfachheit halber der Begriff Vliesschicht bzw. Vliesschutzschicht so zu verstehen ist, dass er sowohl die entsprechenden Schichten aus dem Keramikvliesmaterial als auch die entsprechenden Schichten aus dem Keramikpapiermaterial umfasst, die hier wahlweise bzw. austauschbar verwendet werden können.

Bei Verwendung des Schutzgewebekörpers wird dieser vorzugsweise als maßgefertigter Überzug am Schmelzekontakt-Oberflächenbereich angebracht. Er kann sich dann durch den Flüssigkeitsdruck des Schmelzematerials eng gegen den Schmelzekontakt-Oberflächenbereich des Grundkörpers anlegen, wobei ggf. eingeschlossene Luft verdrängt wird. Im Betrieb des gießtechnischen Bauteils verhindert der Schutzgewebekörper ein Vordringen des Schmelzematerials zum metallischen Grundkörper, wobei er durch seinen Kontakt mit dem heißen Schmelzematerial im Lauf der Gebrauchsdauer, z.B. nach einigen Tagen bzw. Wochen, einen Sintervorgang erfährt, durch den er sich vom flexibel vorgefertigten Gewebekörper zu einem spröden Gewebekörper umwandelt.

Analog zum Fall des flexibel vorgefertigten Schutzgewebekörpers ist auch die als biegeweiche Vliesschicht vorgefertigte Vliesschutzschicht in der Lage, gegenüber der Metallschmelze als inerte Barriere zu fungieren und auf diese Weise den metallischen Grundkörper vor Korrosion durch die Metallschmelze zu schützen.

Bei Verwendung des Schutzformkörpers bildet dieser eine von außen nach innen dichte Verkleidung für den Schmelzekontakt-Oberflächenbereich des Grundkörpers des gießtechnischen Bauteils und kann insbesondere als maßgefertigter, einteiliger, starrer Formkörper oder als ein aus mehreren starren Plattenelementen zusammengesetzter Formkörper vorgefertigt sein, wobei in letzterem Fall die Plattenelemente vorgefertigt sind und einzeln am Schmelzekontakt-Oberflächenbereich des Grundkörpers des gießtechnischen Bauteils angeordnet werden können oder alternativ zu einem Formkörper zusammengesetzt und dann gemeinsam als solcher Formkörper am Schmelzekontakt-Oberflächenbereich angeordnet werden können. Etwaige Fugen- oder Übergangsbereiche lateral zwischen benachbarten Plattenelementen können bei Bedarf durch ein temperaturbeständiges Keramikklebermaterial geschlossen werden. Hierfür sind wiederum gießtemperaturbeständige, d.h. gegenüber den typischen Gießbetriebstemperaturen ausreichend temperaturbeständige, insbesondere hochtemperaturfeste, Keramikklebermaterialien verwendbar, wie sie dem Fachmann zu diesem Zweck geläufig sind, z.B. solchen auf Aluminiumoxid-Basis.

Unter der Charakterisierung gießtemperaturbeständig ist hierbei, wie der Begriff sagt, die Beständigkeit des betreffenden Material gegenüber den Gießtemperaturen zu verstehen, denen das Material im Gießbetrieb ausgesetzt ist. Die Gießtemperaturen hängen natürlich vom jeweils zu gießenden Schmelzematerial ab, da es sich aber um Metallschmelzen handelt, sind dies in aller Regel sehr hohe Temperaturen von über 500°C bis weit über 1000°C. Das entsprechend hochtemperaturfeste Material muss bei diesen Temperaturen ausreichend physikalisch und chemisch beständig sein, auch bei längerem Betriebseinsatz. Dem Fachmann sind derartige Materialien für den Einsatz im jeweils vorliegenden Gießtemperaturbereich an sich bekannt, was daher hier keiner näheren Erläuterungen bedarf. Entsprechende gießtemperaturbeständige Formmaterialien, worunter vorliegend der Einfachheit halber auch entsprechende Plattenmaterialien zu verstehen sind, sind dem Fachmann z.B. auch aus dem Ofenbau bekannt.

Bei der mehrlagigen Realisierung können die einen oder mehreren weiteren Schichten je nach Bedarf der verbesserten Anbindung des Korrosionsschutzschichtaufbaus an die Oberfläche des Grundkörpers und/oder der Bereitstellung einer weiteren inerten Barriere zum Schutz des Grundkörpers vor Korrosion durch die Metallschmelze dienen.

Es zeigt sich, dass sich der metallische Grundkörper des erfindungsgemäßen gießtechnischen Bauteils in seinem Schmelzekontakt-Oberflächenbereich, in welchem er im Betrieb mit dem zum Gießen verwendeten, metallischen Schmelzematerial, z.B. Aluminium oder eine Aluminium-Legierung oder ein anderes Nichteisenmetall, in Kontakt kommen kann, durch diesen einlagigen, d.h. aus einer einzelnen Schicht bestehenden, oder mehrlagigen, d.h. aus mehreren übereinanderliegenden Schichten bestehenden, Korrosionsschutzschichtaufbau sehr zuverlässig vor Korrosionserscheinungen schützen lässt, wie sie ansonsten durch den Kontakt mit dem Schmelzematerial verursacht werden könnten.

Beim erfindungsgemäßen Korrosionsschutzschichtaufbau liegt kein Stoffschluss oder ganzflächiger Formschluss desselben zum zu schützenden metallischen Grundkörper vor. Dies macht den Korrosionsschutzschichtaufbau im Vergleich zu herkömmlichen stoff- bzw. formschlüssigen Beschichtungen unempfindlicher gegen mechanische Beschädigungen, wobei etwaige Schädigungen zudem lokal stärker begrenzt bleiben können. Außerdem besitzt der Korrosionsschutzschichtaufbau dadurch eine deutlich bessere Wärmeausdehnungstoleranz, d.h. das Auftreten mechanischer Spannungen im Korrosionsschutzschichtaufbau durch Wärmeausdehnungseffekte des metallischen Grundkörpers kann gegenüber herkömmlichen stoff- bzw. formschlüssigen Beschichtungen vermieden oder jedenfalls deutlich reduziert werden.

Gleichzeitig ist dieser Korrosionsschutzschichtaufbau mit verhältnismäßig geringem Aufwand realisierbar. Dazu wird der Schutzgewebekörper und/oder die Vliesschutzschicht und/oder der Schutzformkörper aus dem entsprechenden Gewebematerial, dem Faservlies-/Faserpapiermaterial bzw. dem starren Platten-/Formkörpermaterial in vorgefertigter Form am zu schützenden Schmelzekontakt-Oberflächenbereich des Grundkörpers des gießtechnischen Bauteils angebracht.

Dabei zeigt sich, dass der Korrosionsschutzschichtaufbau mit dem Schutzgewebekörper oder Vliesschutzschicht oder dem Schutzformkörper einen sehr dauerhaften Korrosionsschutz über viele Betriebswochen hinweg insbesondere auch für gießtechnische Bauteile bereitzustellen vermag, deren Grundkörper aus einem Stahlmaterial besteht. Der Korrosionsschutz bleibt zuverlässig auch dann für lange Gebrauchsdauern aufrechterhalten, wenn der Grundkörper mit seinem Schmelzekontakt-Oberflächenbereich ständig in Kontakt mit dem Schmelzematerial des Gießmetalls ist. Es ergibt sich eine höhere Standzeit für das solchermaßen vor Korrosionseinflüssen durch das Schmelzematerial geschützte gießtechnische Bauteil.

Zudem ermöglicht diese Realisierung des Korrosionsschutzschichtaufbaus bei Bedarf eine mit relativ geringem Aufwand mögliche Wiederaufarbeitung und dadurch einen anschließenden erneuten Betriebseinsatz des gießtechnischen Bauteils. Dazu kann die Schicht in Form des Schutzgewebekörpers oder der Vliesschicht oder des Schutzformkörpers relativ einfach entfernt werden, was bei herkömmlichen Schutzbeschichtungen, die in Dünnschichttechnologie auf dem metallischen Grundkörper des gießtechnischen Bauteils abgeschieden wurden, in aller Regel nicht möglich ist. Ebenso können vorliegend bei Bedarf ggf. weitere, optionale Schichten des Korrosionsschutzschichtaufbaus wieder vom metallischen Grundkörper entfernt werden. Anschließend kann der metallische Grundkörper des gießtechnischen Bauteils in seinem Schmelzekontakt-Oberflächenbereich wieder neu mit dem Korrosionsschutzschichtaufbau versehen werden.

Es versteht sich, dass bei Bedarf eine oder mehrere weitere Schichten, die keine Korrosionsschutzfunktion haben, außen auf der äußersten Schicht des Korrosionsschutzschichtaufbaus und/oder innen zwischen der Oberfläche des Grundkörpers und der innersten Schicht des Korrosionsschutzschichtaufbaus und/oder zwischen zwei Schichten des Korrosionsschutzschichtaufbaus vorgesehen sein können.

In entsprechenden Weiterbildungen der Erfindung ist das gießtemperaturbeständige Gewebematerial ein solches auf Aluminiumoxid(Al₂O₃)-Basis, und/oder das gießtemperaturbeständige Faservlies- oder Faserpapiermaterial ist ein solches auf Al₂O₃-Basis, und/oder das gießtemperaturbeständige Formkörpermaterial ist ein solches auf Al₂O₃-Basis. Die daraus hergestellten Komponenten werden dementsprechend vorliegend auch als Al₂O₃-Schutzgewebekörper, Al₂O₃-Vliesschutzschicht bzw. Al₂O₃-Schutzformkörper bezeichnet. Es zeigt sich, dass diese Materialwahl in Bezug sowohl auf die physikalische und chemische Beständigkeit unter den herrschenden Gießtemperaturen als auch auf die technische und wirtschaftliche Realisierbarkeit besonders vorteilhaft ist, u.a. für Anwendungen beim Aluminiumgießen. Es versteht sich, dass solche Materialien auf Al₂O₃-Basis in der Regel nicht ausschließlich aus Al₂O₃ zu bestehen brauchen, sondern zusätzliche Stoffkomponenten in Minoritätsanteilen enthalten können.

In einer Weiterbildung der Erfindung ist der Korrosionsschutzschichtaufbau mehrlagig und umfasst wenigstens eine weitere Schicht, die sich von der erstgenannten Schicht unterscheidet und aus der Gruppe ausgewählt sind, die aus dem Schutzgewebekörper, der Vliesschutzschicht, dem Schutzformkörper und einer temperaturbeständigen Keramikkleberschicht besteht. Durch diese mehrlagige Realisierung lässt sich besonders effektiv je nach Bedarf die Anbindung des Korrosionsschutzschichtaufbaus an die Oberfläche des Grundkörpers verbessern und/oder mindestens eine weitere inerte Schichtbarriere zum Schutz des Grundkörpers vor Korrosion durch die Metallschmelze bereitstellen. Für die temperaturbeständige Keramikkleberschicht sind gegenüber den typischen Gießbetriebstemperaturen ausreichend temperaturbeständige Keramikklebermaterialien verwendbar, wie sie dem Fachmann zu diesem Zweck geläufig sind, einschließlich solchen auf Al₂O₃-Basis. In alternativen, einlagigen Realisierungen kommt der Korrosionsschutzschichtaufbau ohne eine solche weitere Schicht aus und besteht nur aus der erstgenannten Schicht und optional einer oder mehreren andersartigen Schichten.

In einer Ausgestaltung der Erfindung ist der Korrosionsschutzschichtaufbau mehrlagig mit der Keramikkleberschicht als einer innersten, d.h. an den Grundkörper angrenzenden Schicht. Die Keramikkleberschicht kann in entsprechenden Anwendungen die Anbindung des Korrosionsschutzschichtaufbaus an den Schmelzekontakt-Oberflächenbereich des Grundkörpers verbessern. In alternativen Ausführungen kommt der Korrosionsschutzschichtaufbau ohne eine solche innerste Keramikkleberschicht aus.

In einer Ausgestaltung der Erfindung ist der Korrosionsschutzschichtaufbau mehrlagig und weist den Schutzgewebekörper als eine äußere Schicht und die Vliesschutzschicht als eine innere Schicht auf. Darunter ist zu verstehen, dass die Vliesschutzschicht näher am Grundkörper angeordnet ist als der Schutzgewebekörper, ohne dass die Vliesschutzschicht zwingend eine innerste Schicht und/oder der Schutzgewebekörper zwingend eine äußerste Schicht des Schichtaufbaus sein muss und ohne dass die Vliesschutzschicht und der Schutzgewebekörper zwingend zwei direkt aufeinanderfolgende Schichten des Schichtaufbaus sein müssen. Dies kombiniert die vorteilhaften Korrosionsschutzeigenschaften und sonstigen chemischen und physikalischen Eigenschaften des Schutzgewebekörpers und der Vliesschutzschicht in günstiger Weise, wobei der Schutzgewebekörper als äußere Schicht die innenliegende Vliesschutzschicht vor mechanischen Einwirkungen, wie Stößen und dergleichen, schützen kann. In einer vorteilhaften Ausführung befindet sich als innerste Schicht des Korrosionsschutzschichtaufbaus die Keramikkleberschicht zwischen der Vliesschutzschicht und dem metallischen Grundkörper des gießtechnischen Bauteils, was die Anbindung des Korrosionsschutzschichtaufbaus und in diesem Fall speziell der an den Schmelzekontakt-Oberflächenbereich des Grundkörpers verbessern kann.

In einer Ausgestaltung der Erfindung ist der Korrosionsschutzschichtaufbau mindestens dreilagig und weist die Keramikkleberschicht als eine innerste Schicht, den Schutzformkörper als eine äußere Schicht und die Vliesschutzschicht als eine zwischenliegende Schicht zwischen der Keramikkleberschicht und dem Schutzformkörper auf. Diese Ausführung kombiniert die vorteilhaften Eigenschaften des dichten außenliegenden Schutzformkörpers mit den Vorteilen der Keramikkleberschicht hinsichtlich guter Anbindung des Korrosionsschutzschichtaufbaus an den Schmelzekontakt-Oberflächenbereich des Grundkörpers des gießtechnischen Bauteils und den Vorteilen der zwischenliegenden Vliesschutzschicht, u.a. auch deren Dickenausgleichsfähigkeit und Nachgiebigkeit gegenüber einwirkenden Druckbelastungen. In alternativen Ausführungen fehlt die zwischenliegende Vliesschutzschicht oder die innere Keramikkleberschicht.

In einer Ausgestaltung der Erfindung besteht die Keramikkleberschicht aus einem temperaturbeständigen, insbesondere hochtemperaturfesten, Keramikklebermaterial auf Al₂O₃-Basis. Dies stellt eine für die vorliegenden Zwecke besonders günstige Wahl des Materials für die Keramikkleberschicht dar. Alternativ kann eine Keramikkleberschicht aus einem anderen temperaturbeständigen Keramikklebermaterial verwendet werden.

In einer Weiterbildung der Erfindung weist der Schutzgewebekörper eine Dicke im Bereich zwischen 0,8mm und 3mm auf. Dieser Dickenbereich erweist sich für den Schutzgewebekörper hinsichtlich Realisierungsaufwand, ausreichendem Korrosionsschutz und einer möglichst beschränkt bleibenden Erhöhung der Abmessungen des gießtechnischen Bauteils durch den Korrosionsschutzschichtaufbau als optimal. Für spezielle Anwendungen kann die Dicke des Al₂O₃-Schutzgewebekörpers außerhalb dieses Bereichs gewählt werden.

In einer Weiterbildung der Erfindung weist die Vliesschutzschicht eine Dicke im Bereich zwischen 0,5mm und 5mm auf. Dieser Dickenbereich erweist sich für die Vliesschutzschicht hinsichtlich Realisierungsaufwand, ausreichendem Korrosionsschutz und einer möglichst beschränkt bleibenden Erhöhung der Abmessungen des gießtechnischen Bauteils durch den Korrosionsschutzschichtaufbau als optimal. Für spezielle Anwendungen kann die Dicke der Vliesschutzschicht außerhalb dieses Bereichs gewählt werden.

In einer Weiterbildung der Erfindung weist der Korrosionsschichtaufbau als eine der mehreren Schichten den Schutzformkörper mit einer Dicke im Bereich zwischen 2mm und 25mm auf. Dieser Dickenbereich erweist sich für den Schutzformkörper hinsichtlich Realisierungsaufwand, ausreichendem Korrosionsschutz und einer möglichst beschränkt bleibenden Erhöhung der Abmessungen des gießtechnischen Bauteils durch den Korrosionsschutzschichtaufbau als optimal. Für spezielle

Anwendungen kann die Dicke des Schutzformkörpers außerhalb dieses Bereichs gewählt werden.

In einer Weiterbildung der Erfindung besteht der Grundkörper aus einem Eisenbasismaterial, insbesondere einem Gussstahlmaterial. Dies kombiniert den Vorteil des vorliegenden Korrosionsschutzschichtaufbaus mit den an sich bekannten Vorteilen der Wahl eines Eisenbasismaterials für den metallischen Grundkörper des gießtechnischen Bauteils. Alternativ kann der Grundkörper des gießtechnischen Bauteils aus einem anderen Metallmaterial gebildet sein.

In einer Weiterbildung der Erfindung ist das gießtechnische Bauteil ein solches für eine Metalldruckgießmaschine, wie z.B. eine Warmkammer-Druckgießmaschine. Insbesondere kann es eine Gießgarnitur, ein Gießbehälter, eine Schmelzeofenkomponente, eine Schmelzeförderkomponente, eine Gießformkomponente oder ein Teil dieser mit der Schmelze in Kontakt kommenden Komponenten der Metalldruckgießmaschine sein. Durch seinen spezifischen Korrosionsschutzschichtaufbau besitzt das gießtechnische Bauteil gerade auch für diese Einsatzzwecke eine hervorragende Eignung und vergleichsweise lange Gebrauchsdauer.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine schematische Schnittdarstellung eines gießtechnischen Bauteils mit partiellem äußerem, dreilagigem Korrosionsschutzschichtaufbau,
- Fig. 2: eine schematische Schnittdarstellung eines Gießbehälters als gießtechnisches Bauteil mit dem partiellen äußeren Korrosionsschutzschichtaufbau von Fig. 1,
- Fig. 3: die Schnittdarstellung von Fig. 1 für eine Variante mit einlagigem statt dreilagigem Korrosionsschutzschichtaufbau und
- Fig. 4: die Schnittdarstellung von Fig. 1 für eine Variante mit zweilagigem statt dreilagigem Korrosionsschutzschichtaufbau.

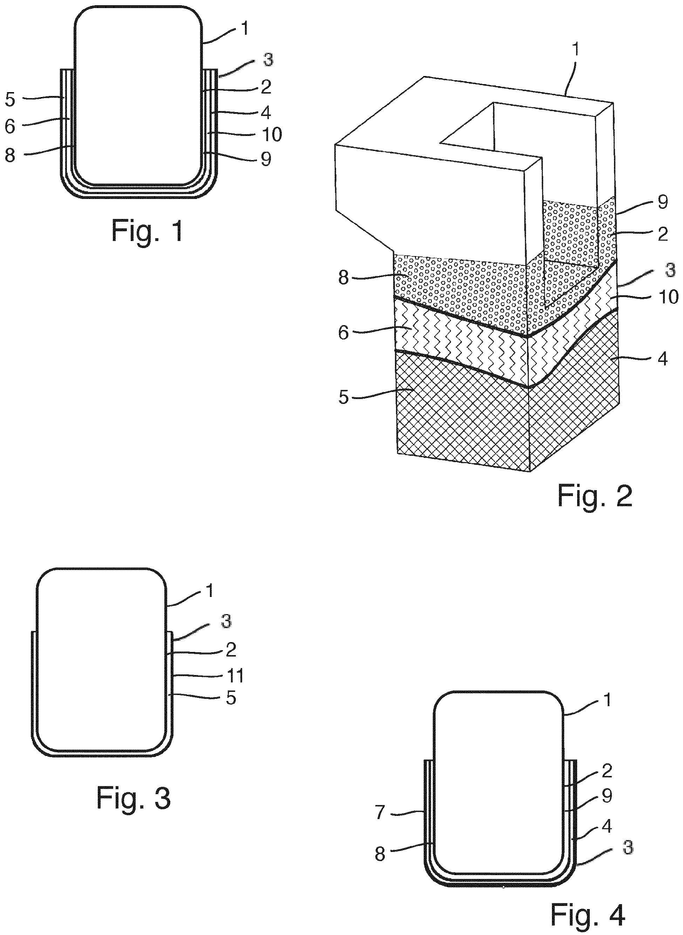

In den Fig. 1, 3 und 4 ist lediglich schematisch mit seinen vorliegend interessierenden Bestandteilen ein gießtechnisches Bauteil für eine Vorrichtung zum Gießen oder Handhaben einer Metallschmelze gezeigt, das einen metallischen Grundkörper 1 aufweist, der in einem Schmelzekontakt-Oberflächenbereich 2 mit einem Korrosionsschutzschichtaufbau 3 versehen ist. Dabei zeigen die Fig. 1, 3 und 4 exemplarisch und stellvertretend für weitere mögliche Realisierungen verschiedene Realisierungsbeispiele für den Korrosionsschutzschichtaufbau 3.

Bei der in Fig. 1 gezeigten Ausführungsform weist der Korrosionsschutzschichtaufbau 3 als eine äußerste, d.h. der Oberfläche des metallischen Grundkörpers 1 abgewandte, Schicht 4 einen als flexiblen Gewebekörper aus einem gießtemperaturbeständigen Gewebematerial vorgefertigten Schutzgewebekörper 5 auf. Weiter umfasst der Korrosionsschutzschichtaufbau 3 im Ausführungsbeispiel von Fig. 1 eine gießtemperaturbeständige Keramikkleberschicht 8 als eine innerste Schicht 9 und eine als biegeweiche Vliesschicht aus einem gießtemperaturbeständigen Faservlies- oder Faserpapiermaterial vorgefertigte Vliesschutzschicht 6 als eine zwischenliegende Schicht 10 des dadurch dreilagigen, d.h. drei Schichten umfassenden, Schichtaufbaus.

Der Schutzgewebekörper 5 ist in einer vorteilhaften Realisierung aus einem gießtemperaturbeständigen Gewebematerial auf Al₂O₃-Basis vorgefertigt, d.h. er bildet in diesem Fall einen Al₂O₃-Schutzgewebekörper. Die Vliesschutzschicht 6 ist in einer vorteilhaften Realisierung aus einem gießtemperaturbeständigen Faservlies- oder Faserpapiermaterial auf Al₂O₃-Basis vorgefertigt, d.h. sie bildet in diesem Fall eine Al₂O₃-Vliesschutzschicht. In alternativen Realisierungen werden andere gießtemperaturbeständige Materialien für die betreffenden Schichtaufbaukomponenten verwendet, z.B. Materialien auf Zirconiumoxid-Basis oder oxidkeramische Verbundmaterialien einschließlich faserverstärkter Verbundmaterialien, wie sie dem Fachmann zum Einsatz in der Gießtechnik und anderen Hochtemperaturanwendungen an sich bekannt sind. Die Vliesschutzschicht 6 besitzt vorzugsweise eine Dicke im Bereich zwischen 0,5mm und 5mm. Das Faservlies- bzw. Faserpapiermaterial für die Vliesschutzschicht 6 besteht aus Fasern, deren Länge kleiner ist als diejenige von zugfesten Fasern, mit denen der flexible Gewebekörper für den Schutzgewebekörper 5 gebildet ist.

Fig. 2 zeigt konkret einen Fall, bei dem das gießtechnische Bauteil mit dem Korrosionsschutzschichtaufbau 3 in der Realisierung von Fig. 1 ein Gießbehälter ist, wie er beispielsweise in einer Metalldruckgießmaschine und spezieller in einer Warmkammer-Druckgießmaschine zum Gießen von Aluminium oder Aluminiumlegierungen oder anderen Nichteisen-Gießmetallen gebräuchlich ist. Der Gießbehälter von Fig. 2 ist von einer an sich bekannten Bauart, wie sie beispielsweise in der oben erwähnten Patentschrift EP 2 723 916 B1 offenbart ist. In alternativen Ausführungen bildet das gießtechnische Bauteil eine Gießgarnitur, einen Gießbehälter, eine Schmelzeofenkomponente, eine Schmelzeförderkomponente, eine Gießformkomponente oder ein Teil einer dieser Druckgießmaschinenkomponenten. Zur besseren Verdeutlichung der Schichtfolge, die der Korrosionsschutzschichtaufbau 3 in diesem beispielhaft gezeigten Fall besitzt, sind die beteiligten Schichten auf unterschiedlichen Höhen des Gießbehälters geschnitten gezeigt, so dass jede Schicht zumindest bereichsweise zu erkennen ist.

In alternativen Ausführungen ist in einer zweilagigen Realisierung des Korrosionsschutzschichtaufbaus 3 nur die Keramikkleberschicht 8 oder nur die Vliesschutzschicht 6 als innerste Schicht 9 zwischen dem metallischen Grundkörper 1 und dem Schutzgewebekörper 5 als äußerster Schicht 4 vorgesehen.

Bei der in Fig. 3 gezeigten Ausführungsform ist der Korrosionsschutzschichtaufbau 3 einlagig realisiert, d.h. er besteht nur aus einer einzelnen, schutzrelevanten Schicht 11, die in diesem Beispiel vom Schutzgewebekörper 5 gebildet ist. Der Schutzgewebekörper bzw. Al₂O₃-Schutzgewebekörper 5 besitzt hier und in anderen, mehrlagigen Realisierungen des Korrosionsschutzschichtaufbaus 3, in denen er verwendet ist, vorzugsweise eine Dicke im Bereich zwischen 0,8mm und 3mm. In einer alternativen Ausführung besteht die einzige Schicht 11 des Korrosionsschichtaufbaus 3 in einlagiger Realisierung aus der Vliesschutzschicht bzw. Al₂O₃-Vliesschutzschicht 6. Beschränkt auf relativ kleine Flächenbereiche bzw. Übergangsbereiche kann auch die Keramickleberschicht 8 als einlagige Kleberbeschichtung für den Korrosionsschichtaufbau 3 zum Einsatz kommen.

Bei der in Fig. 4 gezeigten Ausführungsform ist der Korrosionsschutzschichtaufbau 3 zweilagig realisiert mit der Keramikkleberschicht 8 als innerer bzw. innerster Schicht 9 und einem als starrer Formkörper aus einem gießtemperaturbeständigen Formkörpermaterial vorgefertigten Schutzformkörper 7 als äußerer bzw. äußerster Schicht 4. Der Schutzformkörper 7 ist in einer vorteilhaften Realisierung aus einem gießtemperaturbeständigen Formkörpermaterial auf Al₂O₃-Basis vorgefertigt, d.h. er bildet in diesem Fall einen Al₂O₃-Schutzformkörper. In alternativen Realisierungen werden andere gießtemperaturbeständige Materialien für den Schutzformkörper verwendet, z.B. wiederum Materialien auf Zirconiumoxid-Basis oder oxidkeramische Verbundmaterialien einschließlich faserverstärkter Verbundmaterialien.

In alternativen Ausführungen ist der Korrosionsschutzschichtaufbau 3 dreilagig, d.h. drei Schichten umfassend, mit dem Schutzformkörper 7 als der äußersten Schicht 4, der Keramikkleberschicht 8 als der innersten Schicht 9 und der Vliesschutzschicht 6 oder dem Schutzgewebekörper 5 als zwischenliegender Schicht zwischen der Keramikkleberschicht 8 und dem Schutzformkörper 7 realisiert.

Bei Verwendung der Vliesschutzschicht 6 als zwischenliegende Schicht 10 in den entsprechenden Fällen einer mindestens dreilagigen Realisierung des Korrosionsschutzschichtaufbaus 3 kann diese als weitere, inerte Barriere gegenüber dem Schmelzematerial dienen und dadurch den metallischen Grundkörper 1 auch dann vor Korrosion zuverlässig schützen, wenn der äußere Schutzgewebekörper 5 oder der äußere Schutzformkörper 7 beschädigt bzw. penetriert ist.

Eine analoge zusätzliche Sicherheit vor Korrosion bieten die anderen möglichen mehrlagigen Ausführungen des Korrosionsschutzschichtaufbaus 3. Bei diesen mehrschichtigen Ausführungen des Korrosionsschutzschichtaufbaus 3 ist es äußerst unwahrscheinlich, dass durch z.B. mechanische Beschädigung einer der mehreren Schichten, insbesondere der äußersten Schicht 4, die Metallschmelze mit dem metallischen Grundkörper 1 in direkten Kontakt kommen kann, da noch eine oder mehrere weitere Schichten des Korrosionsschutzschichtaufbaus 3 verbleiben, die an der lokalen Schädigungsstelle der geschädigten Schicht die Korrosionsschutzfunktion übernehmen können.

In weiteren alternativen Ausführungen umfasst der Korrosionsschutzschichtaufbau 3 vier oder mehr übereinanderliegende Schichten, von denen jede aus der Gruppe ausgewählt ist, die aus der vom Schutzgewebekörper 5 bereitgestellten Schicht, der von der Vliesschutzschicht 6 bereitgestellten Schicht, der vom Schutzformkörper 7 bereitgestellten Schicht und der von der Keramikkleberschicht 8 bereitgestellten Schicht besteht und von denen mindestens zwei voneinander verschieden sind.

Die Keramikkleberschicht 8 besteht vorzugsweise aus einem temperaturbeständigen Keramikklebermaterial auf Al₂O₃-Basis, wofür ein entsprechendes herkömmliches Keramikklebermaterial dieser Art verwendbar ist. Die Keramikkleberschicht 8 kann je nach Bedarf partiell oder vollflächig auf dem metallischen Grundkörper 1 in dessen Schmelzekontakt-Oberflächenbereich 2 aufgebracht sein. Vorzugsweise besitzt das Keramikklebermaterial der Keramikkleberschicht 8 bei Verwendung mit dem Schutzformkörper 7 einen Wärmeausdehnungskoeffizienten, der weitestgehend demjenigen des Metallmaterials des Grundkörpers 1 entspricht. Damit können thermische Spannungen zwischen dem metallischen Grundkörper 1 und dem diesen im Schmelzekontakt-Oberflächenbereich 2 umgebenden Schutzformkörper 7 minimiert werden. An kleineren Flächenbereichen bzw. Übergängen kann die Keramikkleberschicht 8 flächig auch als alleinige Beschichtung oder Füllung verwendet werden.

Der Grundkörper 1 besteht vorzugsweise aus einem Eisenbasismaterial, insbesondere einem Gussstahlmaterial, wie dies für metallische Grundkörper gießtechnischer Bauteile an sich bekannt ist, d.h. es ist ein herkömmlich hierfür übliches Metallmaterial auf Eisen- bzw. Stahlbasis verwendbar.

Der Schutzformkörper 7 kann je nach Bedarf und Anwendungsfall als maßgefertigter, einteiliger, starrer Formkörper aus geeignetem Formkörpermaterial dadurch vorgefertigt sein, dass er aus mehreren starren, vorgefertigten Plattenelementen gebildet ist, die aus einem für den vorliegenden Einsatzzweck geeigneten Plattenmaterial bestehen und direkt am Grundkörper 1 des gießtechnischen Bauteils oder alternativ zuerst zum Formkörper zusammengesetzt und dann gemeinsam als einheitlicher Formkörper am Schmelzekontakt-Oberflächenbereich 2 des Grundkörpers 1 angeordnet werden. Etwaige Fügespalte bzw. Schnittstellen und/oder Übergänge zwischen den Plattenelementen können z.B. mit dem gleichen Keramikklebermaterial wie dasjenige der Keramikkleberschicht 8, alternativ mit einem anderen temperaturbeständigen Keramicklebermaterial verschlossen bzw. versiegelt werden. Der Schutzformkörper 7 besitzt, wenn er die einzige Schicht des Korrosionsschichtaufbaus ist, eine Dicke im Bereich zwischen 2mm und 25mm. Auch in typischen Ausführungsbeispielen, bei denen er eine von mehreren Schichten des Korrosionsschichtaufbaus ist, kann er eine Dicke im Bereich zwischen 2mm und 25mm aufweisen.

Bei Verwendung des Schutzgewebekörpers 5 ist dieser vorzugsweise maßgefertigt als flexibler Gewebekörper aus dem betreffenden herkömmlichen gießtemperaturbeständigen Gewebematerial, wie einem Al₂O₃-Gewebematerial, vorgefertigt und an den Grundkörper 1 in dessen Schmelzekontakt-Oberflächenbereich 2 angelegt. Sobald der flexible Gewebekörper mit der Metallschmelze in Kontakt kommt, z.B. beim Eintauchen des Grundkörpers 1 in die Metallschmelze, wird er durch den Druck des Schmelzematerials gegen den Schmelzekontakt-Oberflächenbereich 2 angedrückt, und ggf. eingeschlossene Luft wird verdrängt. Der Schutzgewebekörper bzw. Al₂O₃-Schutzgewebekörper 5 verhindert ein Vordringen der Metallschmelze zum metallischen Grundkörper 1 und wandelt sich vom zu Gebrauchsbeginn zunächst flexiblen, elastischen Gewebekörper im Lauf des weiteren Gebrauchs, typischerweise nach einigen Tagen oder Wochen des Inkontakttretens mit dem Schmelzematerial, durch einen Sintereffekt zu einem spröden Gewebekörper um.

Bei Verwendung der Vliesschutzschicht 6 als innerer Schicht innerhalb des Schutzformkörpers 7 als äußerer Schicht 4 kann die Vliesschutzschicht 6, die eine weiche und elastische Schicht darstellt, bei Bedarf mit variabler Dicke in den Korrosionsschutzschichtaufbau 3 eingebracht sein. Damit lässt sich eine unterschiedliche Wärmeausdehnung des metallischen Grundkörpers 1 gegenüber der starren, dichten und eher spröden Verkleidung kompensieren, die durch den äußeren Schutzformkörper 7 gebildet wird.

Der Korrosionsschutzschichtaufbau 3 ist dadurch, dass er keinen Stoffschluss bzw. ganzflächigen Formschluss mit dem zu schützenden metallischen Grundkörper 1 besitzt, im Vergleich zu herkömmlichen stoff- bzw. formschlüssigen Beschichtungen unempfindlicher gegen mechanische Beschädigungen, und etwaige Schädigungen können lokal gut begrenzt bleiben. Außerdem besitzt der Korrosionsschutzschichtaufbau 3 aus diesem Grund eine deutlich bessere Wärmeausdehnungstoleranz, d.h. das Auftreten mechanischer Spannungen im Korrosionsschutzschichtaufbau 3 durch Wärmeausdehnungseffekte des metallischen Grundkörpers 1 kann im Vergleich zu herkömmlichen stoff- bzw. formschlüssigen Beschichtungen vermieden oder jedenfalls deutlich reduziert werden.

Wenngleich in den gezeigten Ausführungsbeispielen der metallische Grundkörper 1 nur partiell und außenseitig mit dem Korrosionsschutzschichtaufbau 3 versehen ist, versteht es sich, dass in anderen Ausführungsformen der metallische Grundkörper 1 bei Bedarf nicht nur partiell, sondern vollflächig an seiner gesamten Außenseite und/oder auch an inneren, mit dem Schmelzematerial in Kontakt kommenden Oberflächenbereichen partiell oder vollständig mit dem Korrosionsschutzschichtaufbau 3 versehen sein kann.

## Patentansprüche

1. Gießtechnisches Bauteil für eine Vorrichtung zum Gießen oder Handhaben einer Metallschmelze, wobei
- das Bauteil einen metallischen Grundkörper (1) aufweist, der in einem Schmelzekontakt-Oberflächenbereich (2) mit einem Korrosionsschutzschichtaufbau (3) aus einer oder mehreren übereinanderliegenden Schichten versehen ist,
**dadurch gekennzeichnet, dass**
- der Korrosionsschutzschichtaufbau (3) als einzige Schicht (11) einen als flexibler Gewebekörper aus einem gießtemperaturbeständigen Gewebematerial vorgefertigten Schutzgewebekörper (5) oder eine als biegeweiche Vliesschicht aus einem gießtemperaturbeständigen Faservliesmaterial oder Faserpapiermaterial vorgefertigte Vliesschutzschicht (6) oder einen als starrer Formkörper aus einem gießtemperaturbeständigen Formkörpermaterial vorgefertigten Schutzformkörper (7) mit einer Dicke im Bereich zwischen 2mm und 25mm aufweist oder mehrere Schichten aufweist, von denen eine ein als flexibler Gewebekörper aus einem gießtemperaturbeständigen Gewebematerial vorgefertigter Schutzgewebekörper (5) oder eine als biegeweiche Vliesschicht aus einem gießtemperaturbeständigen Faservliesmaterial oder Faserpapiermaterial vorgefertigte Vliesschutzschicht (6) oder ein als starrer Formkörper aus einem gießtemperaturbeständigen Formkörpermaterial vorgefertigter Schutzformkörper (7) ist.

2. Gießtechnisches Bauteil nach Anspruch 1, weiter **dadurch gekennzeichnet, dass** das gießtemperaturbeständige Gewebematerial ein solches auf Al₂O₃-Basis ist.

3. Gießtechnisches Bauteil nach Anspruch 1 oder 2, weiter **dadurch gekennzeichnet, dass** das gießtemperaturbeständige Faservlies- oder Faserpapiermaterial ein solches auf Al₂O₃-Basis ist.

4. Gießtechnisches Bauteil nach einem der Ansprüche 1 bis 3, weiter **dadurch gekennzeichnet, dass** das gießtemperaturbeständige Formkörpermaterial ein solches auf Al₂O₃-Basis ist.

5. Gießtechnisches Bauteil nach einem der Ansprüche 1 bis 4, weiter **dadurch gekennzeichnet, dass** der Korrosionsschutzschichtaufbau mehrlagig ist und wenigstens eine weitere Schicht umfasst, die sich von der erstgenannten Schicht unterscheidet und aus der Gruppe ausgewählt ist, die aus dem Schutzgewebekörper (5), der Vliesschutzschicht (6), dem Schutzformkörper (7) und einer gießtemperaturbeständigen Keramikkleberschicht (8) besteht.

6. Gießtechnisches Bauteil nach Anspruch 5, weiter **dadurch gekennzeichnet, dass** der Korrosionsschutzschichtaufbau die Keramikkleberschicht (8) als eine innerste Schicht (9) aufweist.

7. Gießtechnisches Bauteil nach Anspruch 5 oder 6, weiter **dadurch gekennzeichnet, dass** der Korrosionsschutzschichtaufbau den Schutzgewebekörper (5) als eine äußere Schicht und die Vliesschutzschicht (6) als eine innere Schicht aufweist.

8. Gießtechnisches Bauteil nach einem der Ansprüche 5 bis 7, weiter **dadurch gekennzeichnet, dass** der Korrosionsschutzschichtaufbau mindestens dreilagig ist und den Schutzformkörper (7) oder den Schutzgewebekörper (5) als eine äußere Schicht, die Keramikkleberschicht (8) als eine innerste Schicht und die Vliesschutzschicht (6) als eine zwischenliegende Schicht zwischen der Keramickleberschicht (8) und dem Schutzformkörper (7) oder dem Schutzgewebekörper (5) aufweist.

9. Gießtechnisches Bauteil nach einem der Ansprüche 5 bis 8, weiter **dadurch gekennzeichnet, dass** die Keramikkleberschicht (8) aus einem gießtemperaturbeständigen Keramikklebermaterial auf Al₂O₃-Basis besteht.

10. Gießtechnisches Bauteil nach einem der Ansprüche 1 bis 9, weiter **dadurch gekennzeichnet, dass** der Schutzgewebekörper (5) eine Dicke im Bereich zwischen 0,8mm und 3mm aufweist.

11. Gießtechnisches Bauteil nach einem der Ansprüche 1 bis 10, weiter **dadurch gekennzeichnet, dass** die Vliesschutzschicht (6) eine Dicke im Bereich zwischen 0,5mm und 5mm aufweist.

12. Gießtechnisches Bauteil nach einem der Ansprüche 1 bis 11, weiter **dadurch gekennzeichnet, dass** der der Korrosionsschutzschichtaufbau (3) als eine der mehreren Schichten den Schutzformkörper (7) mit einer Dicke im Bereich zwischen 2mm und 25mm aufweist.

13. Gießtechnisches Bauteil nach einem der Ansprüche 1 bis 12, weiter **dadurch gekennzeichnet, dass** der Grundkörper (1) aus einem Eisenbasismaterial besteht.

14. Gießtechnisches Bauteil nach Anspruch 13, weiter **dadurch gekennzeichnet, dass** der Grundkörper (1) aus einem Gussstahlmaterial besteht.

15. Gießtechnisches Bauteil nach einem der Ansprüche 1 bis 14, weiter **dadurch gekennzeichnet, dass** es ein solches für eine Metalldruckgießmaschine ist, insbesondere eine Gießgarnitur, ein Gießbehälter, eine Schmelzeofenkomponente, eine Schmelzeförderkomponente, eine Gießformkomponente oder ein Teil einer dieser Druckgießmaschinenkomponenten.

## Claims

1. Foundry component for an apparatus for casting or handling a metal melt, wherein
- the component comprises a metallic main body (1) which is provided in a melt-contact surface region (2) with an anticorrosion layer structure (3) composed of one or more superposed layers, **characterized in that**
- the anticorrosion layer structure (3) comprises, as sole layer (11), a protective woven fabric body (5) prefabricated as flexible woven fabric body from a woven fabric material which is casting temperature resistant or a nonwoven protective layer (6) prefabricated as pliable nonwoven layer from a fibre nonwoven material or fibre paper material which is casting temperature resistant or a protective shaped body (7) prefabricated as rigid shaped body from a shaped body material which is casting temperature resistant and has a thickness in the range from 2 mm to 25 mm, or comprises a plurality of layers, of which layers one layer is a protective woven fabric body (5) prefabricated as flexible woven fabric body from a woven fabric material which is casting temperature resistant or a nonwoven protective layer (6) prefabricated as pliable nonwoven layer from a fibre nonwoven material or fibre paper material which is casting temperature resistant or a protective shaped body (7) prefabricated as rigid shaped body from a shaped body material which is casting temperature resistant.

2. Foundry component according to Claim 1, further **characterized in that** the woven fabric material which is casting temperature resistant is a material based on Al₂O₃.

3. Foundry component according to Claim 1 or 2, further **characterized in that** the fibre nonwoven or fibre paper material which is casting temperature resistant is a material based on Al₂O₃.

4. Foundry component according to any of Claims 1 to 3, further **characterized in that** the shaped body material which is casting temperature resistant is a material based on Al₂O₃.

5. Foundry component according to any of Claims 1 to 4, further **characterized in that** the anticorrosion layer structure is multi-ply and comprises at least one further layer which differs from the first-named layer and is selected from the group consisting of the protective woven fabric body (5), the nonwoven protective layer (6), the protective shaped body (7) and a ceramic adhesive layer (8) which is casting temperature resistant.

6. Foundry component according to Claim 5, further **characterized in that** the anticorrosion layer structure has the ceramic adhesive layer (8) as an innermost layer (9).

7. Foundry component according to Claim 5 or 6, further **characterized in that** the anticorrosion layer structure has the protective woven fabric body (5) as an outer layer and the nonwoven protective layer (6) as an inner layer.

8. Foundry component according to any of Claims 5 to 7, further **characterized in that** the anticorrosion layer structure is at least three-ply and has the protective shaped body (5) or the protective woven fabric body (5) as an outer layer, the ceramic adhesive layer (8) as an innermost layer and the nonwoven protective layer (6) as an intermediate layer between the ceramic adhesive layer (8) and the protective shaped body (5).

9. Foundry component according to any of Claims 5 to 8, further **characterized in that** the ceramic adhesive layer (8) consists of a casting temperature resistant ceramic adhesive material based on Al₂O₃.

10. Foundry component according to any of Claims 1 to 9, further **characterized in that** the protective woven fabric body (5) has a thickness in the range from 0.8 mm to 3 mm.

11. Foundry component according to any of Claims 1 to 10, further **characterized in that** the nonwoven protective layer (6) has a thickness in the range from 0.5 mm to 5 mm.

12. Foundry component according to any of Claims 1 to 11, further **characterized in that** the anticorrosion layer structure (3) comprises as one of the plurality of layers the protective shaped body (7) with a thickness in the range from 2 mm to 25 mm.

13. Foundry component according to any of Claims 1 to 12, further **characterized in that** the main body (1) consists of an iron-based material.

14. Foundry component according to Claim 13, further **characterized in that** the main body (1) consists of a cast steel material.

15. Foundry component according to any of Claims 1 to 14, further **characterized in that** it is a component for a metal pressure casting machine, preferably a casting fitting, a casting vessel, a melt furnace component, a melt transport component, a casting mould component or a part of one of these pressure casting machine components.

## Revendications

1. Composant de fonderie pour un dispositif de coulée ou de manipulation d'un métal en fusion, dans lequel
- le composant présente un corps de base métallique (1) qui est pourvu, dans une zone de surface (2) en contact avec la masse fondue, d'une structure de couche de protection anticorrosive (3) constituée d'une ou de plusieurs couches superposées,
**caractérisé en ce que**
- la structure de couche de protection anticorrosive (3) présente, en tant que couche unique (11), un corps en tissu de protection (5) préfabriqué sous forme de corps en tissu flexible à partir d'un matériau de tissu résistant à la température de coulée, ou une couche de protection en non-tissé (6) préfabriquée sous forme de couche en non-tissé souple à la flexion à partir d'un matériau de non-tissé de fibres ou d'un matériau de papier de fibres résistant à la température de coulée, ou un corps de moule de protection (7) préfabriqué sous forme de corps de moule rigide à partir d'un matériau de corps de moule résistant à la température de coulée, ayant une épaisseur comprise entre 2 mm et 25 mm, ou présente plusieurs couches dont l'une est un corps en tissu de protection (5) préfabriqué sous forme de corps en tissu flexible à partir d'un matériau de tissu résistant à la température de coulée, ou une couche de protection en non-tissé (6) préfabriquée sous forme de couche en non-tissé souple à la flexion à partir d'un matériau de non-tissé de fibres ou d'un matériau de papier de fibres résistant à la température de coulée, ou un corps de moule de protection (7) préfabriqué sous forme de corps de moule rigide à partir d'un matériau de corps de moule résistant à la température de coulée.

2. Composant de fonderie selon la revendication 1,
**caractérisé en outre en ce que** le matériau de tissu résistant à la température de coulée est un matériau à base d'Al₂O₃.

3. Composant de fonderie selon la revendication 1 ou 2,
**caractérisé en outre en ce que** le matériau de non-tissé de fibres ou de papier de fibres résistant à la température de coulée est un matériau à base d'Al₂O₃.

4. Composant de fonderie selon l'une des revendications 1 à 3, **caractérisé en outre en ce que** le matériau du corps de moule résistant à la température de coulée est un matériau à base d'Al₂O₃.

5. Composant de fonderie selon l'une des revendications 1 à 4, **caractérisé en outre en ce que** la structure de couche de protection anticorrosive est multicouche et comprend au moins une autre couche qui est différente de la première couche mentionnée et qui est choisie dans le groupe constitué par le corps en tissu de protection (5), la couche de protection en non-tissé (6), le corps de moule de protection (7) et une couche de colle céramique (8) résistante à la température de coulée.

6. Composant de fonderie selon la revendication 5,
**caractérisé en outre en ce que** la structure de couche de protection anticorrosive présente la couche de colle céramique (8) comme couche la plus intérieure (9).

7. Composant de fonderie selon la revendication 5 ou 6,
**caractérisé en outre en ce que** la structure de couche de protection anticorrosive présente le corps en tissu de protection (5) comme couche extérieure et la couche de protection en non-tissé (6) comme couche intérieure.

8. Composant de fonderie selon l'une des revendications 5 à 7, **caractérisé en outre en ce que** la structure de couche de protection anticorrosive est au moins à trois couches et comprend le corps de moule de protection (7) ou le corps en tissu de protection (5) en tant que couche extérieure, la couche de colle céramique (8) en tant que couche la plus intérieure et la couche de protection en non-tissé (6) en tant que couche intermédiaire entre la couche de colle céramique (8) et le corps de moule de protection (7) ou le corps en tissu de protection (5).

9. Composant de fonderie selon l'une des revendications 5 à 8, **caractérisé en outre en ce que** la couche de colle céramique (8) est constituée d'un matériau de colle céramique à base d'Al₂O₃ résistant à la température de coulée.

10. Composant de fonderie selon l'une des revendications 1 à 9, **caractérisé en outre en ce que** le corps en tissu de protection (5) présente une épaisseur comprise entre 0,8 mm et 3 mm.

11. Composant de fonderie selon l'une des revendications 1 à 10, **caractérisé en outre en ce que** la couche de protection en non-tissé (6) présente une épaisseur comprise entre 0,5 mm et 5 mm.

12. Composant de fonderie selon l'une des revendications 1 à 11, **caractérisé en outre en ce que** la structure de couche de protection anticorrosive (3) comprend, tant qu'une parmi plusieurs couches, le corps de moule de protection (7) ayant une épaisseur comprise entre 2 mm et 25 mm.

13. Composant de fonderie selon l'une des revendications 1 à 12, **caractérisé en outre en ce que** le corps de base (1) est constitué d'un matériau à base de fer.

14. Composant de fonderie selon la revendication 13,
**caractérisé en outre en ce que** le corps de base (1) est constitué d'un matériau en acier coulé.

15. Composant de fonderie selon l'une des revendications 1 à 14, **caractérisé en outre en ce qu'**il s'agit d'un composant pour une machine de coulée sous pression de métaux, en particulier d'une garniture de coulée, d'un récipient de coulée, d'un composant de four de fusion, d'un composant de transport de masse fondue, d'un composant de moule de coulée ou d'une partie d'un de ces composants pour une machine de coulée sous pression.
